Europäisches Patentamt

European Patent Office

Office européen des brevets

(11) Veröffentlichungsnummer : **0 041 724**
**B1**

# EUROPÄISCHE PATENTSCHRIFT

(45) Veröffentlichungstag der Patentschrift :
28.11.84

(21) Anmeldenummer : 81104404.9

(22) Anmeldetag : 09.06.81

(51) Int. Cl.³ : **F 24 J 3/02**, **E 04 C 2/52**,
**E 04 C 1/39**

(54) **Von einer Flüssigkeit durchströmte Platte.**

(30) Priorität : 10.06.80 DE 3021716

(43) Veröffentlichungstag der Anmeldung :
16.12.81 Patentblatt 81/50

(45) Bekanntmachung des Hinweises auf die Patenterteilung : 28.11.84 Patentblatt 84/48

(84) Benannte Vertragsstaaten :
AT BE CH DE FR GB IT LI LU NL SE

(56) Entgegenhaltungen :
DE-A- 2 222 048
FR-A- 2 260 671
US-A- 3 570 206

(73) Patentinhaber : **Iduso Gesellschaft zur Förderung
und Verwertung kreativer Ideen mbH
Am Lenkert 11
D-5300 Bonn 2 (DE)**

(72) Erfinder : **Der Erfinder hat auf seine Nennung
verzichtet**

(74) Vertreter : **Patentanwaltsbüro Cohausz & Florack
Schumannstrasse 97
D-4000 Düsseldorf 1 (DE)**

## Beschreibung

Die Erfindung betrifft eine von Flüssigkeit durchströmte Platte aus Beton oder Keramik für die Aufnahme, Speicherung oder Abgabe von Wärme, insbesondere Solarwärme, die bis auf eine Zu- und Ableitung allseitig geschlossen ist.

Aus der US-A-4 164 933 ist eine Platte aus Beton bekannt, die im Inneren eine serpentinenförmig angeordnete Leitung aufweist. Die Leitung ist von einem Fluid durchströmt, um Sonnenwärme aufzufangen. In diesen meist leicht oder stärker geneigt angeordneten Platten sammelt sich regelmäßig Luft oder andere Gase an den höchstgelegenen Stellen der Leitung, wodurch der Wirkungsgrad verringert wird. Dies könnte durch Entlüftungen vermieden werden, die aber den Herstellungsaufwand erhöhen und oft zu Undichtigkeiten führen. Auch ist es schwierig, eine serpentinenförmige Leitung mit gleichmäßigem Querschnitt über ihre Länge in einer Platte anzuordnen. Ferner neigen solche Leitungen zum Verstopfen, sobald Fremdkörper im Fluid enthalten sind.

Auch sind Platten bekannt aus Beton oder Keramik, allseitig geschlossen und nahtlos in einem Stück kaltgeformt. Die DE-A-28 19 642 beschreibt z. B. ein Flachdach aus wasserundurchlässigem Beton mit eingebettetem Leitungssystem. Die DE-A-28 14 004 zeigt eine Betonplatte mit eingelagerter Rohrschlange aus Kunststoff, und die DE-U-78 22 118, DE-U-77 17 901 enthalten Kollektordachplatten aus Beton mit darin eingebetteten mit Drähten und/oder Blechteilen verbundenen Röhren.

Diese Platten haben im Verhältnis zu den insgesamt zu stellenden Anforderungen erhebliche Nachteile. Zunächst haben diese aus Beton oder Keramik gefertigten Teile keine handliche und für Montagebauweise geeignete Form und Größe, so daß daraus ein ganzer Dachbelag, wie dies von Dachpfannen her bekannt ist, als Solarabsorber oder eine ganze Innenwandplattierung als Niedrigtemperaturheizkörper nicht zusammengesetzt werden könnte. Dort, wo einzelne Platten miteinander verbunden werden, geschieht dies bisher grundsätzlich durch eine starre Verbindung, die Materialspannungen, wie sie bei Temperaturschwankungen auftreten, nicht auffangen kann. Der Wartungs- und Reparaturaufwand ist daher und auch aus anderen Gründen besonders hoch. Ein Haupthindernis für den Einsatz von Platten aus Beton oder Keramik für den genannten Zweck ist die Tatsache, daß diese ein spiral-, mäanderförmig oder auf eine sonstige Weise gestaltetes Leitungssystem besitzen. Dies schränkt die Wärmetranparenz ein und macht gelegentliche Entlüftungen erforderlich, die insbesondere auf dem Dach lästig sind und hohe Kosten verursachen. Schließlich haben die bisher bekannten Platten aus Beton oder Keramik ein so hohes Gewicht, daß ihrer Anwendung aus statischen Gründen in der Regel Grenzen gesetzt sind.

Der Erfindung liegt die Aufgabe zugrunde, eine vielseitig verwendbare handliche Platte zu schaffen, in deren Innerem die Flüssigkeit optimal kommuniziert, die keine Entlüftungsanschlüsse erfordert, eine hohe Wärmedurchlässigkeit besitzt und ästhetischen Erfordernissen optimal entspricht.

Diese Aufgabe wird erfindungsgemäß dadurch erreicht, daß die Platte einen zusammenhängenden, flachen, von Leitungen freien Hohlraum geringer Höhe aufweist, der nur durch einzelne durch den Hohlraum verlaufende Stützstege unterbrochen ist, die den Hohlraum druckfest zusammenhalten und ein flächenhaftes Durchströmen bei einem allseitigen Kommunizieren zulassen.

Diese Platten haben eine handliche und für Montagebauweise geeignete Form und Größe, sind dicht, haltbar, wartungs- und reparaturfreundlich, besitzen einen Hohlraum, der im Falle der Verwendung eines flüssigen Mediums auch bei unterschiedlicher Temperaturbeanspruchung keine besondere Entlüftung erfordert, wie dies z. B. in mäander- oder spiralförmig verlegten Leitungssystemen notwendig ist, halten allen im Betrieb üblicherweise anfallenden inneren und äußeren Belastungen stand, sind im Falle der Verwendung als Absorber oder Niedrigtemperaturheizkörper Platten von geringem Gewicht, d. h. von geringer Dicke, die auf der Wärme aufnehmenden bzw. Wärme abgebenden Seite zum Erreichen einer hohen Wärmetransparenz eine ensprechende dünnwandige Hülle haben, können mit so geringen Material- und Lohnkosten gefertigt werden, daß ihr Einsatz als Solarabsorberplatte, als Niedrigtemperaturheizkörperplatte oder als Wärmespeicherelement auch betriebswirtschaftlich gerechtfertigt ist.

Es können dünne, leichte Platten in handlichen Abmessungen, z. B. in den Maßen 300 × 300 × 20 mm, geschaffen werden, die einen vollständig zusammenhängenden Hohlraum besitzen, der nur durch Stützstege unterbrochen wird und nach allen Richtungen kommuniziert. Dadurch wird zugleich sowohl ein gleichmäßiges Durchströmen, eine hohe Wärmetransparenz als auch eine ausgezeichnete Druckfestigkeit von innen und außen sichergestellt. Der eine große Innenfläche bildende Hohlraum kann mit z. B. 2-3 mm Höhe so extrem flach gehalten werden, daß der Durchfluß des den Wärmetransport sichernden Mediums gerade noch ausreicht. Erfahrungen haben ergeben, daß auf diese Weise bereits wasserdichte Betonplatten mit einer Dicke von nur 16 mm hergestellt werden können.

Die Kupplung zweier Platten wird dadurch dicht, dauerhaft und flexibel hergestellt, daß diese an den Stirnseiten mit ihren Öffnungen unter Zwischenschaltung einer elastischen Steckverbindung fest gegeneinander gepreßt werden. Die Platten liegen dann nicht mehr wie Dachpfannen aufeinander, sondern bilden eine zusammenhängende Dachfläche. Dabei tritt das wärmeführende Medium aus der Zuleitung jeweils an der tiefsten Stelle einer Plattenreihe ein, strömt durch diese Plattenreihe nach oben und verläßt dort die Plattenreihe in Richtung Wärmepumpe, Wärmespeicher usw. Die untere Seite kann am Schrägdach an der Dachtraufe, die obere am Dachfirst liegen. Die Aufgabe des Daches, das Wasser abzuwehren, übernimmt bei dieser Verlegetechnik eine unter den Platten liegende wasserdichte Schicht, beispielsweise eine PVC-Folie, die ihrerseits in waagerecht sich überlappende Streifen auf eine wärmedämmende Schicht aufgelegt sit. Durch diesen Aufbau bleiben die ursprünglichen Funktionen des Daches voll erhalten. Seine Aufgabe wird lediglich um die Funktion der Wärmeaufnahme bzw. der Wärmeabgabe erweitert.

Die Verwendung dieser Platten als Niedrigtemperaturheizkörper ist besonders vorteilhaft. Sie ermöglichen es, ganze Innenwände, den Fußboden oder auch die Decke in Heizfläche zu verwandeln, billig ein Vielfaches der traditionellen Heizkörperfläche anzubieten und dadurch die Betriebstemperatur der Heizung auf 30 °C und weniger zu senken. Dadurch sind bisher kaum realisierbare Voraussetzungen für den Einsatz weniger aufwendiger Wärmepumpen gegeben. Eine rentable Nutzung solarer und Umweltenergie rückt dank geringerer Material- und Lohnkosten bei der Herstellung derartiger Heizkörper in die Zone betriebswirtschaftlicher Rentabilität.

Ein weiterer Vorteil der erfindungsgemäßen Platten liegt darin, daß diese ausgesprochen wartungs- und reparaturfreundlich sind. Wegen der totalen Kommunikation des Hohlraumes ist die Beseitigung einer punktuellen Undichtigkeit durch Öffnen dieser Stelle und Einführung eines Dichtungspfropfens aus Beton oder einem anderen Werkstoff möglich, ohne die Funktion der gesamten Platte zu beeinträchtigen. Bei größeren Undichtigkeiten, z. B. Plattenbruch, lassen sich die Platten auch leicht auseinanderkuppeln, ersetzen und wieder zusammenkuppeln, ohne das ganze System längere Zeit außer Betrieb setzen zu müssen.

Aus der US-A-3 570 206 ist es an sich bekannt, einen Hohlraum eines Bauelementes durch einzelne säulenförmige Stege zu stützen. Hier handelt es sich aber um Teile eines Kabelkanals, die zum Anschluß an benachbarte Teile meist an drei oder vier Stirnseiten über die gesamte Breite offen sind. Die Anschlußflächen brauchen keine hohe Dichtigkeit zu besitzen, da durch die Bauelemente höchstens Luft, aber keine Flüssigkeit strömt. Auch ist es die Aufgabe dieser bekannten Bauelemente, möglichst großräumige Kanäle zu schaffen, während bei der erfindungsgemäßen Platte dafür gesorgt wird, das Volumen des Innenraumes klein zu halten, um Flüssigkeitsmenge und Gesamtgewicht gering zu halten.

Im folgenden wird die Erfindung anhand von lediglich eine Ausführung darstellenden Zeichnungen näher erläutert. Es zeigen :

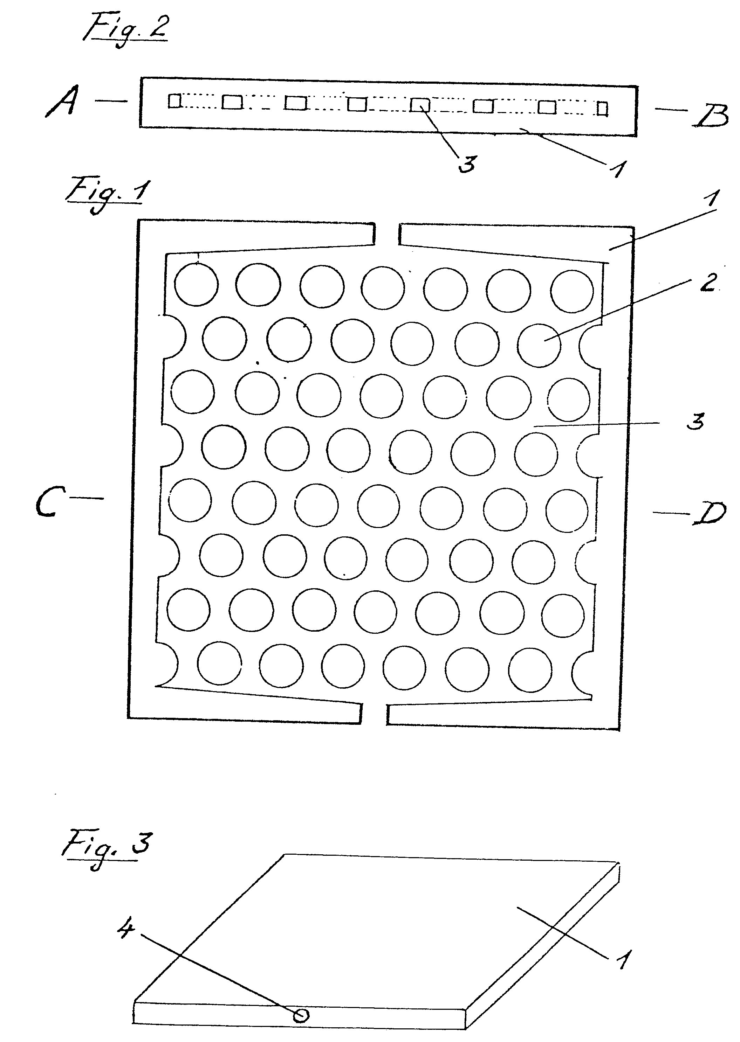

Figur 1 eine Platte in Form einer handelsüblichen Abdeckplatte gemäß Schnitt AB in Fig. 2 ;

Figur 2 die Platte nach Fig. 1 von der Seite gemäß Schnitt CD in Fig. 1 ;

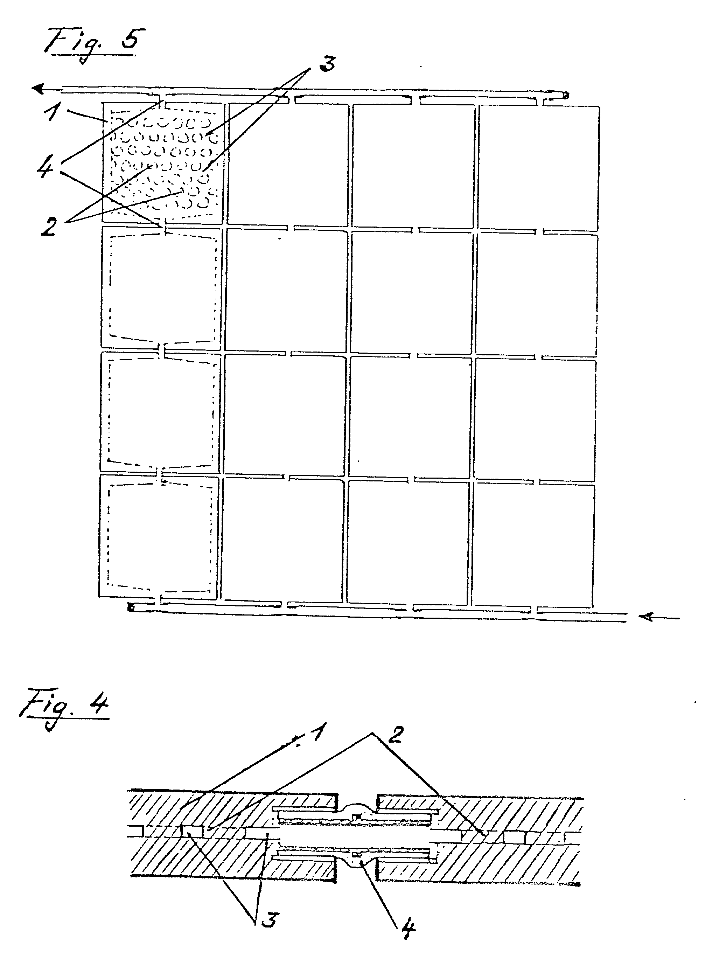

Figur 3 eine Platte in perspektivischer Darstellung ;

Figur 4 eine elastische Steckverbindung zwischen zwei Platten im Längsschnitt ;

Figur 5 ein System von zusammengekuppelten Platten als Dach-, Wand- oder Bodenbelag.

In den Figuren ist die Körperhülle der Platte mit dem Bezugszeichen 1 bezeichnet. Der lediglich von Stützstegen 2 durchbrochene, aber ansonsten zusammenhängende flache Hohlraum geringer Dicke hat das Bezugszeichen 3. Zwischen zwei Platten bzw. zwischen einer Platte und einer Zu- oder Ableitung sind elastische Steckverbindungen 4 befestigt, die eine begrenzte Beweglichkeit der Platten zueinander erlauben.

Durch die Platten kann Niedrigtemperaturwärme für die Heizung und als Brauchwasser gewonnen werden. Besonders vorteilhaft ist dabei die oben bereits beschriebene kombinierte Verwendung von Hohlkörperplattenbelägen als Solarabsorber auf dem Dach, an den Außenwänden sowie auf Gehwegen usw. mit Hohlkörperplattenbelägen als Niedrigtemperaturheizkörper an Innenwänden, auf dem Fußboden usw. und mit Hohlkörpersteinsystemen als Wärmespeicher. Hohlkörperplatten an den Außenwänden können dabei, soweit sie nicht mit einem flüssigen wärmeführenden Medium gefüllt sind, in kalten Jahreszeiten auch zur Außenisolierung von Gebäuden beitragen.

Bei der Beurteilung der Verwendung von Hohlkörpern aus Beton oder Keramik ist außerdem zu berücksichtigen, daß diese sowohl in Platten- wie auch in Steinform nach traditionellen Methoden verlegt werden können. Dies ist vor allem für das Dachdeckerhandwerk bedeutsam, wobei die gute optische Anordnung von Hohlkörperplatten auf dem Dach eine nicht zu unterschätzende Rolle spielt.

Die Platten gestatten eine Reihe von Abwandlungen. Ungenutzte Abwärme, z. B. von Kraftwerken, findet dort eine günstige Verwendung, wo nahegelegene Treibhäuser billig geheizt werden können, wenn deren Außenwände und Gehwege aus Hohlkörperplatten bestehen.

Eine besondere Bedeutung hat der Hohlkörper aus Beton für Gebiete mit hoher Tag-Nacht-Temperaturdifferenz, die zusammen mit Wassermangel jede Vegetation erschwert, wenn nicht verhindert. Großflächige Wärmeentnahme am Tage und Wärmezufuhr in der Nacht über Hohlkörperplatten bieten hier zusammen mit einer aus den Platten gespeisten dosierten Bewässerung gute Verhältnisse für eine neuartige Plantagenwirtschaft, wobei hohe Temperaturdifferenzen überdies zur Erzeugung elektrischer Energien mittels Niedrigtemperaturgeneratoren genutzt werden können. Der schon für gemäßigte Klimazonen beschriebene Nutzen an Energieersparnis durch Einsatz von Hohlkörpern aus Beton oder Keramik erhält auf diese Weise ein ökonomisch wichtiges Pendant, das vorzugsweise Entwicklungsländern zugute kommen kann.

## Ansprüche

1. Von einer Flüssigkeit durchströmte Platte (1) aus Beton oder Keramik für die Aufnahme, Speicherung oder Abgabe von Wärme, insbesondere Solarwärme, die bis auf eine Zu- und Ableitung allseitig geschlossen ist, dadurch gekennzeichnet, daß sie einen zusammenhängenden, flachen, von Leitungen freien Hohlraum (3) geringer Höhe aufweist, der nur durch einzelne durch den Hohlraum verlaufende Stützstege (2) unterbrochen ist, die den Hohlraum druckfest zusammenhalten und ein flächenhaftes Durchströmen bei einem allseitigen Kommunizieren zulassen.

2. Platte nach Anspruch 1, dadurch gekennzeichnet, daß sie mittels flexibler Steckverbindungen (4) in Serie geschaltet Teil eines Wärme aufnehmenden oder Wärme abgebenden Dach-, Wand- oder Bodenbelages ist.

## Claims

1. A plate (1) of concrete or ceramic traversed by a fluid for receiving, storing or emitting heat, in particular solar heat, which is closed on all sides up to a supply and discharge line, characterised in that it comprises an associated, flat, hollow chamber (3) of a small height which is free from lines, which chamber is only interrupted by individual support ribs (2) extending through the hollow chamber, which ribs hold the hollow chamber together in a pressure resistant manner and enable a laminar flow with communication on all sides.

2. A plate as claimed in claim 1, characterised in that it forms, by means of flexible plug-in connections (4) a series-connected section of a heat-receiving or heat-transmitting roof, wall or floor covering.

## Revendications

1. Panneau traversé par un liquide en béton ou céramique pour l'absorption, l'accumulation ou la conduction de chaleur, en particulier de chaleur solaire, qui est fermé de tous côtés à l'exception d'une adduction et d'une dérivation, caractérisé par le fait que le panneau présente une cavité (3) communiquante plate, sans conduite et de faible hauteur, qui est seulement interrompue par des entretoises (2) passant dans la cavité et qui la maintiennent à l'épreuve de la pression et permettent une traversée à contact superficiel par une communication de tous les côtés.

2. Panneau selon la revendication 1, caractérisé par le fait qu'il constitue une partie, montée en série au moyen de fixations à enfoncement élastiques (4), d'un revêtement de plafond, de mur ou de plancher absorbant la chaleur ou restituant la chaleur.

Fig. 2

A —          — B

3                1

Fig. 1

1

2

C —                    — D

3

Fig. 3

4

1

1

_Fig. 5_

_Fig. 4_